# EUROPÄISCHE PATENTSCHRIFT

(11) **EP 0 422 651 B1**
(45) Veröffentlichungstag und Bekanntmachung des Hinweises auf die Patenterteilung: **08.03.1995**
(21) Anmeldenummer: 90119517.2
(22) Anmeldetag: 11.10.1990
(51) Int. Cl.: G05B 19/18, G05B 19/416

(54) **Verfahren zum spanenden Bearbeiten eines Werkstückes sowie entsprechende Werkzeugmaschine**
Procedure for cutting a workpiece and machine tool therefore
Procédé pour usiner une pièce et machine conforme au procédé

(30) Priorität: 11.10.1989 DE 3933993
(43) Veröffentlichungstag der Anmeldung: 17.04.1991
(73) Patentinhaber: GRUNDIG Aktiengesellschaft, 90762 Fürth (DE)
(72) Erfinder: Eckhart, Volker, Dr. Ing., W-3300 Braunschweig (DE); Nolting, Klaus, W-3000 Hannover 1 (DE)

(56) Entgegenhaltungen:
- EP-A- 0 203 452
- EP-A- 0 206 984
- EP-A- 0 328 392
- EP-A- 0 335 659
- WO-A-87/06364
- DE-A- 3 812 642
- DE-C- 3 618 349
- Robert, D. Lorenz et al.: "Synchronized motion control for process automation."01 Oktober 1989, IEEE Industry Application Society,San Diego, CA, US

## Beschreibung

Die Erfindung betrifft ein Verfahren zum spanenden Bearbeiten eines Werkstückes in einer Werkzeugmaschine, bei dem das Werkstück zwischen zwei separat angetriebenen, drehzahlgeregelten Spindeln einspannbar ist.

Aus der DE-A1-38 12 642 ist eine Drehmaschine mit zwei einander zugewandten Werkstückspindeln bekannt. Die Spanneinrichtungen an diesen Werkstückspindeln können zum Bearbeiten oder zum Transport Werkstücke gleichzeitig an gegenüberliegenden Enden spannen.
Es ist außerdem bekannt, ein in einer ersten Spindel vorbearbeitetes Stangenende in der Spanneinrichtung der gegenüberliegenden Werkstückspindel einzuspannen und das bearbeitete Stangenende von der Werkstoffstange abzutrennen. Sowohl die unmittelbare Übergabe eines Werkstücks von einer Werkstückspindel zur anderen als auch die Bearbeitung eines von beiden Werkstückspindeln gehaltenen Werkstücks bedingen den Antrieb beider Spindeln mit Synchrondrehzahl. In vielen Fällen muß das Werkstück wegen der Außenkontur und wegen der nachfolgenden Bearbeitung in bestimmter Drehlage ergriffen werden. Dazu werden die Werkstückspindeln nicht nur mit Synchrondrehzahl, sondern auch in bestimmter Phasenlage angetrieben. Von den Spindeln erfolgt eine Rückmeldung der Drehzahl und der Phasenlage an die NC-Steuerung. Daraus ist abzuleiten, daß für jede Spindel ein Drehzahlregelkreis und ein Phasenregelkreis vorgesehen ist. Ferner ist vorgesehen, daß die NC-Steuerung den einen Spindelantrieb so steuern kann, daß er nur mit der Hälfte des Nenndrehmomentes der anderen Spindel arbeitet. Dies deshalb, um Rückwirkungen auf die andere Spindel zu vermeiden und ein auf das Werkstück ausgeübtes Torsionsmoment zu verringern. Hinweise, wie die Regelkreise im einzelnen ausgebildet sind und in welcher Weise sie zusammenwirken, sind der Druckschrift nicht zu entnehmen. Insbesondere ist nicht das Problem angesprochen, welches sich hinsichtlich der Wirkung der Regelkreise auf das Werkstück ergibt, wenn die beiden Spindeln durch das Werkstück mechanisch miteinander gekoppelt sind. In diesem Fall können nämlich die Antriebe der beiden Spindeln durch die integralen Anteile in den Regelkreisen gegeneinander arbeiten und trotz des reduzierten Drehmomentes des einen Spindelantriebes eine Torsionswirkung auf das Werkstück ausüben, mit der Folge, daß dieses an einer geschwächten Stelle brechen kann. Diese Gefahr besteht insbesondere beim Abstechen eines Werkstückes. Durch die Torsion kann es vor dem vollendeten Abstechvorgang zu einem Bruch der bereits geschwächten Abstechstelle kommen, so daß die abgestochenen Teile des Werkstückes einen unerwünschten Butzen aufweisen.

Nach der DE-C-36 18 349 ist ferner eine Prüfeinrichtung zur Überprüfung eines Abstechvorganges an einem Werkstück bekannt, das zwischen zwei Spindeln eingespannt ist. Bei dem Antrieb jeder der beiden Spindeln sind die Drehzahl, der Drehwinkel und das Drehmoment geregelt. Um nun festzustellen, ob am Ende eines für den Abstechvorgang vorgegebenen Zeitintervalls der Abstechvorgang erfolgreich durchgeführt wurde, d.h. zwischen den beiden Spindeln keine mechanische Verbindung mehr besteht, wird ein Sollwert (Drehzahl, Drehwinkel oder Drehmoment) für den einen Spindelantrieb geändert und bei dem anderen Spindelantrieb festgestellt, ob die Differenz zwischen dem entsprechenden Soll- und Istwert größer als ein vorgegebener Mindestwert ist.

Wenn dieser Mindestwert überschritten wird, so ist dies ein Anzeichen für eine mechanische Verbindung zwischen den Spindeln, d.h. für einen noch nicht vollendeten Abstechvorgang, und es wird in diesem Fall ein Fehlersignal erzeugt.

Aus der nicht vorveröffentlichten europäischen Offenlegungsschrift EP-A2-0 385 459, die nur nach Artikel 54 (3) und (4) EPÜ zum Stand der Technik gehört, ist eine Vorrichtung zum Antreiben zweier drehzahlgeregelter Spindeln in einer Werkzeugmaschine bekannt, bei der die zweite Spindel der ersten Spindel nach dem Master-Slave-Prinzip nachgeregelt ist und bei der der Betrag des Zustellwertes für die zweite Spindel durch veränderbare Maximalwerte begrenzt ist.

Der Erfindung liegt die Aufgabe zugrunde, das Zusammenwirken der Regelkreise für die Antriebe der beiden Spindeln, die zeitweilig durch das Werkstück mechanisch miteinander verbunden sind, zu verbessern.

Ausgehend von dem eingangs beschriebenen Verfahren besteht die erfindungsgemäße Lösung darin, daß Änderungen der Drehzahlregler-Stellwerte für die eine Spindel nur innerhalb eines Toleranzbandes zugelassen werden, welches durch oberhalb und unterhalb der Drehzahlregler-Stellwerte für die andere Spindel gelegene veränderbare Grenzen vorgegeben wird, und daß das Toleranzband bei Nichtsynchronlauf der Spindeln breit und bei Synchronlauf schmal eingestellt wird.

Der erfindungsgemäßen Lösung liegt folgende Überlegung zugrunde: Damit das Werkstück zwischen den beiden Spindeln eingespannt werden kann, müssen diese drehzahlsynchron laufen. Damit die zunächst mechanisch nicht durch das Werkstück verbundenen Spindeln synchron laufen können, müssen beide Drehzahl-Regelkreise unabhängig oder zumindest weitgehend unabhängig voneinander arbeiten können, wobei ihnen der gleiche Drehzahl-Sollwert zugeführt wird. In diesem Fall muß das Toleranzband also breit sein. Wenn die beiden Spindeln synchron laufen, kann das beidseitige Einspannen des Werkstückes erfolgen. Die dadurch bewirkte mechanische Verbindung zwischen den Spindeln sorgt zwangsläufig für eine gleiche Drehzahl der Spindeln. Da die Drehzahl-Regelkreise jedoch integrale Anteile enthalten, die in der Realität, wenn auch geringfügig, voneinander abweichen, kommt es nach einiger Zeit in beiden Drehzahl-Regelkreisen zu unterschiedlichen Regelbedingungen, die letztlich dazu führen, daß die Antriebe für die beiden Spindeln zunehmend voneinander abweichende Drehmomente auf das Werkstück ausüben. Um dem entgegenzuwirken, wird das Toleranzband nach Erreichen des Synchronlaufes schmal gemacht. Das bedeutet, daß eine Regelung des einen Drehzahl-Regelkreises nur noch in engen Grenzen möglich ist. Stößt der Drehzahlregler-Stellwert dieses einen Regelkreises an die obere oder untere Grenze, so übernimmt dieser eine Regelkreis automatisch den entsprechenden Drehzahlregler-Stellwert des anderen Regelkreises.

Gemäß einer zweckmäßigen Ausgestaltung bzw. Weiterbildung der Erfindung kann zusätzlich das Drehmoment beider Spindeln geregelt werden, wobei der Drehzahlregler-Stellwert für jede der beiden Spindeln als Drehmoment-Sollwert für die betreffende Spindel verwendet wird. Bei engem Toleranzband werden demnach die Antriebe beider Spindeln so geregelt, daß sie gleiches oder nahezu gleiches Drehmoment haben. Auf diese Weise wird ein auf das Werkstück wirkendes Torsionsmoment vermieden.

Die Grenzen des Toleranzbandes werden in einfacher Weise so gewählt, daß sie eine lineare Funktion zwischen den Drehzahlregler-Stellwerten für die beiden Spindeln bilden. Es ist aber auch möglich, für das Verhältnis zwischen den beiden Drehzahlregler-Stellwerten eine nichtlineare Funktion vorzusehen.

Das Verhältnis der Drehzahlregler-Stellwerte für die beiden Spindeln kann gemäß einer anderen Weiterbildung der Erfindung zumindest dann, wenn das Werkstück zwischen beiden Spindeln eingespannt ist und bearbeitet wird, zwecks Schnittkraftaufteilung auf beide Spindeln von Eins verschieden gewählt werden. Auf diese Weise wird unter der Voraussetzung einer zusätzlichen Drehmomenten-Regelung der Spindeln gewährleistet, daß die Spindeln mit unterschiedlichen Drehmomenten angetrieben werden können derart, daß derjenige Teil des zwischen den beiden Spindeln eingespannten Werkstückes, gegen den die Werkzeugschneide gerichtet ist, mit einem größeren Drehmoment beaufschlagt wird als der andere Teil, mit der Folge, daß ein Bruch eines zwischen diesen beiden Teilen gelegenen geschwächten Bereiches infolge eines Torsionsmomentes vermieden wird. Im Fall des Abstechens kann das Drehmoment für die eine Spindel sogar Null oder nahezu Null gewählt werden. Auf diese Weise ist ein butzenloses Abstechen möglich.

Gemäß einer anderen Weiterbildung (s. Anspruch 5) des erfindungsgemäßen Verfahrens, wird vorgeschlagen, daß zusätzlich der Drehwinkel zumindest einer Spindel regelbar ist und daß dem Drehwinkel-Sollwert für diese Spindel zür Bildung der Drehwinkel-Regelabweichung neben dem Drehwinkel-Istwert dieser Spindel der DrehwinkelIstwert der anderen Spindel aufgeschaltet wird derart, daß sich die Drehwinkel-Regelabweichung aus der Abweichung der Differenz der Drehwinkel-Istwerte der beiden Spindeln von dem Drehwinkel-Sollwert für die eine Spindel ergibt.
Diese Drehwinkel-Regelung erlaubt es, vor der Übernahme eines Werkstückes im Winkelsynchronlauf eine Verdrehung der Spannfutter relativ zueinander vorzugeben, um beispielsweise ein unsymmetrisches Werkstück lagerichtig zu erfassen. Ferner erlaubt es diese Drehwinkel-Regelung, in eine vorbearbeitete außermittige Bohrung, die an einem von der Hauptspindel gehaltenen Werkstück hergestellt wurde, von der Rückseite ein Gewinde zu schneiden, da die genaue Lage der Bohrung mit Hilfe der erwähnten Drehwinkel-Regelabweichung ermittelt werden kann.
Nach dem Schließen der Spannfutter im Winkelsynchronlauf kann eine bleibende Drehwinkel-Regelabweichung vorliegen. Dieser Drehwinkelversatz, der sich bei einer anschließenden rückwärtigen Bearbeitung als Maßfehler auswirken würde, kann von der Steuereinheit erfaßt werden. Dazu wird für einen bestimmten Zeitraum überprüft, ob die Änderungen der Regelabweichung innerhalb vorgegebener Grenzen bleiben, d.h. ob ein stationärer Winkelfehler vorliegt. Der gemessene Winkel kann nach der Übernahme des Werkstückes vor der anschließenden Bearbeitung korrigiert werden.

Der Drehwinkel-Stellwert kann der aus Drehzahl-Istwert und Drehzahl-Sollwert ermittelten Drehzahl-Regelabweichung des einen Drehzahl-Regelkreises aufgeschaltet werden.

Ein anderer weiterbildender Aspekt (s. Anspruch 7) der Erfindung, besteht darin, daß zwecks Feststellung der Trennung der mechanischen Verbindung beider Spindeln, insbesondere eines vollendeten Abstechvorgangs an dem zwischen beiden Spindeln eingespannten Werkstück geprüft wird, ob die Differenz der DrehzahlIstwerte der beiden Spindeln einen vorgegebenen Grenzwert überschreitet. Diese Methode kann noch dadurch verfeinert werden, daß zusätzlich geprüft wird, ob die Differenz der Drehwinkel-Istwerte einen bestimmten Grenzwert überschreitet. Auf diese Weise kann auch festgestellt werden, wann ein Abstechvorgang abgeschlossen ist.

Die Erfindung betrifft ferner eine Werkzeugmaschine zum spanenden Bearbeiten eines zwischen zwei Spindeln einspannbaren Werkstückes zum Ausführen des vorstehend beschriebenen Verfahrens, deren erfindungsgemäße Ausbildung aus dem Anspruch 9 entnehmbar ist.

Ausgestaltungen dieser Werkzeugmaschine sind in den Ansprüchen 10 bis 18 angegeben.

Ein Ausführungsbeispiel der Erfindung ist nachfolgend anhand der Zeichnung beschrieben.

Es zeigen
- Fig. 1: eine schematische Ansicht zweier Werkstückspindeln mit Spindelantrieb und NC-Steuereinheit,
- Fig. 2: ein Blockschaltbild der einzelnen Regelkreise.

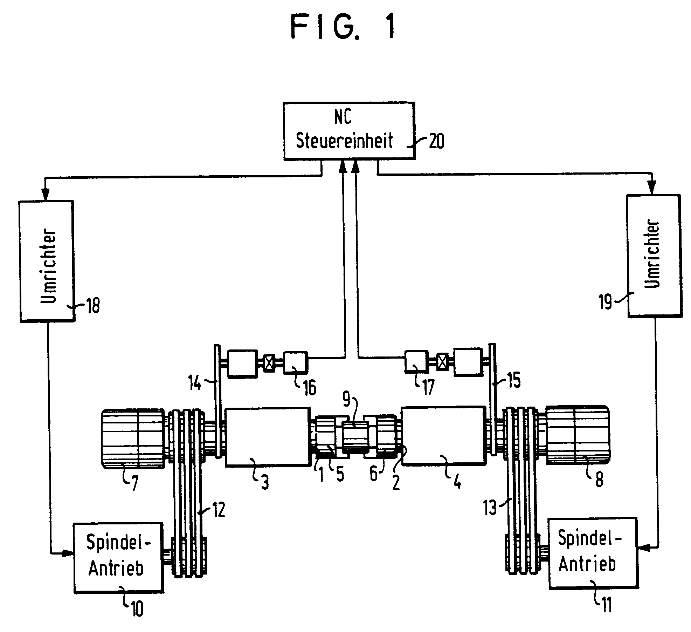

In Fig. 1 ist eine Hauptspindel 1 einer nicht dargestellten Drehmaschine und eine Gegenspindel 2 gezeigt. Der Hauptspindel 1 und die Gegenspindel 2 sind in Spindelkästen 3 und 4 gelagert, von denen mindestens einer in Spindelachsrichtung verschlieblich ist. Die Gegenspindel 2 kann auch eine im Werkzeugträger der Drehmaschine gelagerts Hilfsspindel sein. An der Hauptspindel 1 und der Gegenspindel 2 sind je ein Spannfutter 5, 6 befestigt, die von Spannzylindern 7, 8 geöffnet und geschlossen werden können. In dem dargestellten Beispiel wird ein Werkstück 9 von beiden Spannfuttern 5, 6 gehalten.

Die Hauptspindel 1 und die Gegenspindel 2 werden von je einem Spindelantrieb 10, 11 über Riementriebe 12, 13 rotierend angetrieben. Über je einen weiteren Zahnriemen 14, 15 sind die Werkstückspindeln 1, 2 mit Drehwinkelgebern 16, 17 verbunden, die Drehlagen der Werkstückspindeln 1, 2 an eine NC-Steuereinheit 20 melden. Die Steuereinheit 20 enthält wesentliche Teile von zwei Drehzahl-Regelkreisen, von denen jeder zur Drehzahl-Regelung eines der beiden Spindelantriebe 10, 11 dient.

Jeder der beiden Drehzahl-Regelkreise enthält einen Umrichter 18, 19, der selbst einen untergeordneten Drehmomenten-Regelkreis bildet.

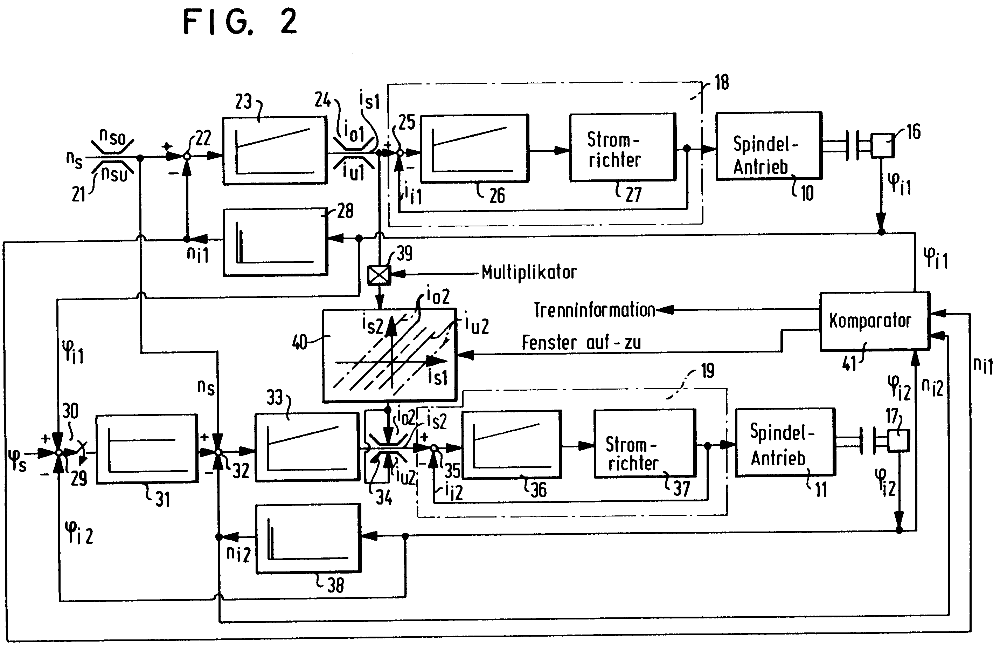

Die in Fig. 2 genauer dargestellte Regelungschaltung ist im wesentlichen Teil der NC-Steuereinheit (20) in Fig. 1. Sie weist zwei Drehzahl-Regelkreise auf, denen ein gemeinsamer Drehzahl-Sollwert nₛ zugeführt wird. Der gemeinsame Drehzahl-Sollwert nₛ wird in einem Begrenzer 21 auf zulässige Werte nₛₒ, nₛᵤ begrenzt und dann der Vergleichstelle 32 des einen Drehzahl-Regelkreises sowie der Vergleichstelle 22 des anderen Drehzahl-Regelkreises zugeführt.

Zunächst soll der andere Drehzahl-Regelkreis erläutert werden. Der Vergleichstelle 22 wird neben dem Drehzahl-Sollwert nₛ der Drehzahl-Istwert nᵢ₁ zugeführt. Die Vergleichstelle 22 bildet daraus eine Regelabweichung, welche dem Drehzahlregler 23 zugeführt wird. Der von dem Regler 23 erzeugte Drehzahl-Stellwert (iₛ₁) wird in einem Begrenzer 24 auf zulässige Werte iₒ₁, iᵤ₁ begrenzt und der Vergleichstelle 25 eines Drehmoment-Regelkreises zugeführt, welcher in dem Umrichter 18 enthalten ist. Der Vergleichstelle 25 wird außerdem der Drehmoment-Istwert iᵢ₁ zugeführt. Die von der Vergleichstelle 25 erzeugte Regelabweichung wird einem Drehmoment-Regler 26 zugeführt, dessen Ausgangssignal die Phase eines Stromrichters 27 steuert. Das Ausgangssignal des Stromrichters 27, das dem Ankerstrom des nachfolgenden Spindelantriebes 10 und damit dem Ist-Drehmoment des Spindelantriebes 10 entspricht, wird als Drehmoment-Istwert iᵢ₁ verwendet. Mit dem Spindelantrieb 10 ist, wie in Fig. 1 gezeigt, ein Drehwinkelgeber 16 gekuppelt, der einen Drehwinkel-Istwerk φᵢ₁ erzeugt, welcher einem Differenzierer 28 zugeführt wird. Der Differenzierer erzeugt aus dem Drehwinkel-Istwerk φᵢ₁ durch Differenzieren den Drehzahl-Istwert nᵢ₁. Zu bemerken ist, daß der von dem Drehzahl-Regler (23) erzeugte Stellwert iₛ₁ als Drehmoment-Sollwert für den untergeordneten Drehmoment-Regelkreis 25, 26, 27 verwendet wird.

Der vorstehend erwähnte "eine" Drehzahl-Regelkreis weist eine Vergleichstelle 32 auf, welcher der beiden Drehzahl-Regelkreisen gemeinsame Drehzahl-Sollwert nₛ sowie der entsprechende Drehzahl-Istwert nᵢ₂ zugeführt wird. Ferner wird dieser Vergleichstelle 32 der Stellwert eines später noch erläuterten Drehwinkel-Reglers 31 zugeführt. Die von der Vergleichstelle 32 gebildete Regelabweichung wird einem Drehzahl-Regler 33 zugeführt. Der von diesem erzeugte Stellwert iₛ₂ wird in einem Begrenzer 34 auf einen oberen Grenzwert iₒ₂ und einen unteren Grenzwert iᵤ₂ begrenzt. Die beiden Grenzwerte sind, wie nachfolgend noch erläutert, veränderbar. Der so begrenzte Drehzahlregler-Stellwert iₛ₂ wird der Vergleichstelle 35 eines untergeordneten Drehmoment-Regelkreises zugeführt, der in dem Umrichter 19 enthalten ist.
Auch hier bildet also der Drehzahlregler-Stellwert iₛ₂ gleichzeitig den Drehmoment-Sollwert für den Drehmoment-Regelkreis. Der Vergleichstelle 35 des Drehmoment-Regelkreises wird außerdem der Drehmoment-Istwert iᵢ₂ zugeführt. Die Vergleichstelle 35 bildet daraus eine Regelabweichung, welche einem Drehmoment-Regler 36 zugeführt wird. Dessen Ausgangssignal dient zur Phasensteuerung eines Stromrichters 37. Der vom Stromrichter 37 erzeugte Ausgangsstrom wird dem Spindelantrieb 11 zugeführt und gleichzeitig als Drehmoment-Istwert iᵢ₂ zurückgeführt. Der Spindelantrieb 11 ist mit einem Drehwinkel-Geber 17 gekoppelt, welcher den Drehwinkel-Istwert φᵢ₂ erzeugt. Dieser wird einem Differenzierer 38 zugeführt, der daraus durch Differenzieren den Drehzahl-Istwert nᵢ₂ erzeugt.

Zwischen den beiden Drehzahl-Regelkreisen besteht eine Kopplung. Der von dem Drehzahl-Regler 23 erzeugte und begrenzte Drehzahl-Stellwert iₛ₁, der, wie erwähnt, identisch mit dem Drehmoment-Sollwert iₛ₁ für den entsprechenden untergeordneten Drehmoment-Regelkreis 25, 26, 27 ist, wird einer Stellwert-Fensterschaltung 40 über einen Multiplizierer 39 zugeführt. Der Multiplikations-Faktor (Multiplikator) des Multiplizierers 39 kann durch die NC-Steuereinheit verändert werden. Mit der Stellwert-Fensterschaltung 40 können der obere Grenzwert iₒ₂ und der untere Grenzwert iᵤ₂ des Begrenzers 34 in Abhängigkeit von einem Steuersignal "Fenster auf - zu" verändert werden. Die Stellwert-Fensterschaltung 40 in Fig. 2 zeigt ein erstes in ausgezogenen Linien dargestelltes Grenzwert-Paar iₒ₂, iᵤ₂, welches ein schmales Toleranzband definiert, sowie ein zweites in strichpunktierten Linien ausgeführtes Grenzwert-Paar iₒ₂, iᵤ₂, welches ein breites Toleranzband definiert. Die in der Stellwert-Fensterschaltung 40 in der Mitte des Koordinaten-Kreuzes gezeigte in gestrichelten Linien dargestellte Gerade deutet die hier vorgesehene lineare Abhängigkeit des oberen Grenzwertes iₒ₂ und des unteren Grenzwertes iᵤ₂ von dem Drehmoment-Sollwert iₛ₁ an. Eine solche lineare Abhängigkeit ist nicht zwingend notwendig, sondern lediglich die einfachste Form einer funktionellen Abhängigkeit. Es sind selbstverständlich auch andere Funktionen möglich und realisierbar.

Der Begrenzer 34 hat nun die Wirkung, daß sich der vom Drehzahl-Regler 33 erzeugte Drehzahl-Stellwert iₛ₂ nur in den durch die Stellwert-Fensterschaltung 40 bestimmten Grenzen verändern kann. Stößt der von dem Drehzahl-Regler 33 erzeugte Drehzahl-Stellwert iₛ₂ an eine der beiden Grenzen, so wird er dort festgehalten. Die Grenzen verschieben sich ihrerseits nach oben bzw. nach unten, wenn sich der Drehzahl-Stellwert, der mit dem Drehmoment-Sollwert iₛ₂ identisch ist, nach oben bzw. nach unten verändert. Auf diese Weise ist der Drehmoment-Sollwert iₛ₂ für den Drehmoment-Regler 36 in Grenzen abhängig von dem Drehmoment-Sollwert iₛ₁ für den Drehmoment-Regler 26. Dies hat folgenden Sinn:

Bevor ein vom Futter der einen Spindel gehaltenes Werkstück zwecks Bearbeitung auch vom Futter der anderen Spindel ergriffen werden kann, müssen die beiden Spindeln synchron laufen. Dieser Synchronlauf kann nur erreicht werden, wenn die beiden Drehzahl-Regelkreise frei, d.h. weitgehend unabhängig voneinander arbeiten können. Da ihnen der gleiche Drehzahl-Sollwert nₛ zugeführt wird, tritt irgendwann der Zustand des Synchronlaufs ein. Dieser Zustand wird durch einen Komparator 41 ermittelt, dem die beiden Drehzahl-Istwerte nᵢ₁ und n_{i 2} zugeführt werden. Wenn dieser Komparator 41, der Teil der NC-Steuereinheit sein kann, feststellt, daß die Differenz der beiden Drehzahl-Istwerte nᵢ₁ und nᵢ₂ geringer als ein vorgegebener Grenzwert ist, so erzeugt er für die Stellwert-Fensterschaltung 40 ein Steuersignal "Fenster zu". Die Stellwert-Steuerschaltung 40 verändert dann die Grenzwerte für den Begrenzer 34 derart, daß nunmehr statt des breiten Toleranzbandes (strichpunktierte Linien) das enge Toleranzband (ausgezogene Linie) zur Wirkung kommt. Dies deshalb, weil nach dem erfolgten Einspannen des Werkstückes zwischen beiden Spindeln durch die mechanische Kopplung der beiden Spindeln die Gefahr gegeben ist, daß die beiden Drehzahl-Regelkreise mit den untergeordneten Drehmoment-Regelkreisen wegen der intergralen Anteile mit der Zeit auseinanderlaufen, was sich in unterschiedlichen Drehmomenten für die beiden Spindelantriebe 10,11 auswirkt. Die Spindelantriebe können dadurch gegeneinander wirken, mit der Folge, daß auf das Werkstück ein unerwünschtes Torsionsmoment ausgeübt wird. Diese Gefahr ist weitgehend dadurch eliminiert, daß der Drehzahl-Regelkreis für den Spindelantrieb 11 hinsichtlich seiner Regelfähigkeit entsprechend begrenzt wird. Stattdessen wird dem untergeordneten Drehmoment-Regelkreis 35, 36, 37 in engen Grenzen etwa der gleiche Drehmoment-Sollwert vorgegeben, der auch dem untergeordneten Drehmoment-Regelkreis 25, 26, 27 für den Spindelantrieb 10 zugeführt wird. Wenn nach der Bearbeitung des Werkstückes das Futter der einen Spindel geöffnet wird oder das zwischen den Spindeln eingespannte Werkstück durch Abstechen in zwei Teile geteilt ist, wird die mechanische Kopplung zwischen den beiden Spindeln aufgehoben.
In diesem Fall laufen die Drehzahl-Istwerte nᵢ₁, nᵢ₂, wenn auch geringfügig, auseinander, wodurch der Komparator 41 die Trennung feststellt. Er gibt dann an die Drehmoment-Fensterschaltung (40) das Steuersignal "Fenster auf", wodurch der anfänglich beschriebene Zustand wiederhergestellt wird und die beiden Drehzahl-Regelkreise weitgehend unabhängig voneinander arbeiten können. Der Komparator 41 gibt außerdem in dem beschriebenen Fall eine Trenninformation ab. welche beispielsweise benötigt wird, um festzustellen, ob ein Abstechvorgang erfolgreich beendet worden ist. Die Methode kann noch dadurch verfeinert werden, daß neben den Drehzahl-Istwerten nᵢ₁, nᵢ₂ noch die Drehwinkel-Istwerte φᵢ₁, φᵢ₂ miteinander verglichen werden. So kann die Trenninformation beispielsweise erst dann ausgegeben werden, wenn sowohl die Differenz der Drehzahl-Istwerte nᵢ₁, nᵢ₂ als auch die Differenz der Drehwinkel-Istwerte φᵢ₁, φᵢ₂ größer als ein vorgegebener Grenzwert sind. Statt eines einzigen Komparators 41 können auch zwei Komparatoren vorgesehen werden, wobei der eine nur zur Erzeugung des Steuersignals "Fenster auf - zu" für die Stellwert-Fensterschaltung 40 dient, während der andere die Trenninformation erzeugt.

Neben einer Drehzahl-Regelung ist noch eine Drehwinkel-Regelung vorgesehen. Dazu werden einer Vergleichstelle 29 der Drehwinkel-Sollwert φₛ sowie die beiden Drehwinkel-Istwerte φᵢ₁ und φᵢ₂ zugeführt. Die von der Vergleichstelle 29 erzeugte Regelabweichung wird über einen Schalter 30 einem Drehwinkel-Regler 31 zugeführt. Der von diesem erzeugte Drehwinkel-Stellwert wird der Vergleichstelle 32 des Drehzahl-Regelkreises für den Spindelantrieb 11 zugeführt und damit der Drehzahl-Regelabweichung aufgeschaltet. Durch Wahl des Drehwinkel-Sollwertes φₛ, der von der NC-Steuereinheit geliefert wird, kann auf diese Weise ein bestimmter Winkelversatz zwischen den beiden Spindeln 1, 2 gewährleistet werden. Dies ist beispielsweise erforderlich, wenn beim Abgreifen eines in der einen Spindel 1 vorbearbeiteten Werkstückes 9 durch die andere Spindel 2 eine gezielte lagegenaue Bearbeitung an der Werkstückrückseite erfolgen soll.

Nachfolgend sei noch die Funktion des Multiplizierers 39 beschrieben. Mit diesem Multiplizierer 39 ist es möglich, den der Stellwert-Fensterschaltung 40 zugeführten Drehzahl-Stellwert iₛ₁, der gleichzeitig Drehmoment-Sollwert ist, zu reduzieren (dämpfen) oder zu verstärken (multiplizieren). Auf diese Weise können die Spindelantriebe 10, 11 gezielt mit unterschiedlichen Drehmomenten betrieben werden. Dies ist beispielsweise dann nützlich, wenn das Werkzeug der Werkzeugmaschine beim Bearbeiten stärker (bremsend) auf den im Futter der einen Spindel gehaltenen Teil des Werkstückes wirkt als auf den im Futter der anderen Spindel gehaltenen Teil. In diesem Falle sollte der Antrieb für die erstgenannte Spindel ein größeres Drehmoment aufbringen als der Antrieb für die andere Spindel, da andernfalls das Werkstück einer Torsion ausgesetzt wäre, die letztlich zum Bruch einer geschwächten Stelle führen könnte.

Zu erwähnen ist noch, daß zwischen der Vergleichstelle 29 des Drehwinkel-Regelkreises und dem Drehwinkel-Regler 31 ein Schalter 30 vorgesehen ist, der geöffnet wird, wenn das Werkstück zwischen beiden Spindeln eingespannt ist (mechanische Kopplung der Spindeln). Wäre der Schalter 30 bei mechanischer Kopplung der Spindeln geschlossen, so würde ein unbestimmter Zustand in der gesamten Regelanordnung eintreten, weil die Drehwinkel-Regelung nicht wirksam werden kann.

## Patentansprüche

1. Verfahren zum spanenden Bearbeiten eines Werkstückes (9) in einer Werkzeugmaschine, bei dem das Werkstück zwischen zwei separat angetriebenen, drehzahlgeregelten Spindeln (1;2) einspannbar ist,
**dadurch gekennzeichnet,**
daß Änderungen der Drehzahlregler-Stellwerte (iₛ₂) für die eine Spindel (2) nur innerhalb eines Toleranzbandes (iₒ₂, iᵤ₂) zugelassen werden, wobei das Toleranzband durch oberhalb und unterhalb der Drehzahlregler-Stellwerte (iₛ₁) für die andere Spindel (1) gelegene veränderbare Grenzen vorgegeben wird, und daß das Toleranzband bei Nichtsynchronlauf der Spindeln (1;2) breit und bei Synchronlauf schmal eingestellt wird.

2. Verfahren nach Anspruch 1,
**dadurch gekennzeichnet,**
daß zusätzlich das Drehmoment beider Spindeln (1;2) geregelt wird und daß der Drehzahlregler-Stellwert für jede der beiden Spindeln als Drehmoment-Sollwert für die betreffende Spindel verwendet wird.

3. Verfahren nach Anspruch 1 oder 2,
**dadurch gekennzeichnet,**
daß die Grenzen des Toleranzbandes so gewählt sind, daß der obere und der untere Grenzwert (iₒ₂, iᵤ₂) des Toleranzbandes für den Drehzahlregler-Stellwert (iₛ₂) eine lineare Funktion f(iₛ₁) des Drehzahlregler-Stellwertes (iₛ₁) bilden.

4. Verfahren nach Anspruch 2 oder 3,
**dadurch gekennzeichnet,**
daß das Verhältnis der Drehzahlregler-Stellwerte (iₛ₁; iₛ₂) für die beiden Spindeln (1;2) zumindest dann, wenn das Werkstück (9) zwischen beiden Spindeln eingespannt ist und bearbeitet wird, zwecks Schnittkraftaufteilung auf beide Spindeln von 1 verschieden gewählt wird.

5. Verfahren nach einem der Ansprüche 1 bis 4,
**dadurch gekennzeichnet,**
daß zusätzlich der Drehwinkel zumindest einer Spindel (2) regelbar ist, und daß dem Drehwinkel-Sollwert (φₛ) für diese Spindel zur Bildung der Drehwinkel-Regelabweichung neben dem Drehwinkel-Istwert (φᵢ₂) dieser Spindel (2) der Drehwinkel-Istwert (φᵢ₁) der anderen Spindel (1) aufgeschaltet wird derart, daß sich die Drehwinkel-Regelabweichung aus der Abweichung der Differenz der Drehwinkel-Istwerte (φᵢ₂ - φᵢ₁) der beiden Spindeln (1;2) von dem Drehwinkel-Sollwert (φₛ) für die eine Spindel (2) ergibt.

6. Verfahren nach Anspruch 5,
**dadurch gekennzeichnet,**
daß der Drehwinkelregler-Stellwert (φₛ) der aus DrehzahlIstwert (nᵢ₂) und Drehzahl-Sollwert (nₛ) ermittelten Drehzahl-Regelabweichung des einen Drehzahl-Regelkreises über eine Vergleichstelle (32) aufschaltbar ist.

7. Verfahren nach einem der Ansprüche 1 bis 6,
**dadurch gekennzeichnet,**
daß zwecks Feststellung der Trennung der mechanischen Verbindung beider Spindeln (1;2), insbesondere eines vollendeten Abstechvorganges an dem zwischen beiden Spindeln eingespannten Werkstück (9), geprüft wird, ob die Differenz der Drehzahl-Istwerte (nᵢ₂ - nᵢ₁) der beiden Spindeln einen vorgegebenen Grenzwert überschreitet.

8. Verfahren nach den Ansprüchen 5 und 7,
**dadurch gekennzeichnet,**
daß zusätzlich geprüft wird, ob die Differenz der Drehwinkel-Istwerte (φᵢ₂ - φᵢ₁) einen bestimmten Grenzwert überschreitet.

9. Werkzeugmaschine zum spanenden Bearbeiten eines zwischen zwei Spindeln (1;2) einspannbaren Werkstücks (9) zum Ausführen des Verfahrens nach Anspruch 1, mit je einem separaten Antrieb (10;11) für jede der beiden Spindeln, der Teil eines jeder Spindel zugeordneten Drehzahl-Regelkreises ist,
**dadurch gekennzeichnet,**
daß die Drehzahl-Regelstrecke des einen Drehzahl-Regelkreises (32,33,19,11,17,38) über eine Stellwert-Fensterschaltung (40) mit dem Ausgang des Drehzahl-Reglers (23) des anderen Drehzahl-Regelkreises (22,23,18,10,16,28) verbunden ist und daß die Fensterbreite der Stellwert-Fensterschaltung (40) derart veränderbar ist, daß sie im Nichtsynchronlauf der Spindeln (1,2) breit und im Synchrolauf schmal ist.

10. Werkzeugmaschine nach Anspruch 9,
**dadurch gekennzeichnet,**
daß die Stellwert-Fensterschaltung (40) mit dem Ausgang eines Komparators (41) verbunden ist, dessen Eingängen die Drehzahl-Istwerte (nᵢ₁ - nᵢ₂) der beiden Drehzahl-Regelkreise zuführt sind und der ein Verstellsignal zum Verringern der Fensterbreite für die Stellwert-Fensterschaltung (40) erzeugt, wenn die Differenz der Drehzahl-Istwerte (nᵢ₁ - nᵢ₂) einen bestimmten Grenzwert unterschreitet.

11. Werkzeugmaschine nach Anspruch 9 oder 10,
**dadurch gekennzeichnet,**
daß die Stellwert-Fensterschaltung (40) mit dem Ausgang eines Komparators (41) verbunden ist, dessen Eingängen die Drehwinkel-Istwerte (φᵢ₁ ; φᵢ₂) der beiden Regelkreise zuführt sind und der ein Verstellsignal zum Verringern der Fensterbreite für die Stellwert-Fensterschaltung (40) erzeugt, wenn die Differenz der Drehwinkel-Istwerte (φᵢ₂ - φᵢ₁) einen bestimmten Grenzwert unterschreitet.

12. Werkzeugmaschine nach einem der Ansprüche 9 bis 11,
**dadurch gekennzeichnet,**
daß die Drehzahl-Regelstrecke jeder der beiden Drehzahl-Regelkreise einen untergeordneten Drehmoment-Regelkreis enthält, dessen Drehmoment-Sollwert-Eingang (25;35) identisch mit dem Drehzahlregler-Stellwert-Eingang der Drehzahl-Regelstrecke des ihm übergeordneten Drehzahl-Regelkreises ist.

13. Werkzeugmaschine nach Anspruch 12,
**dadurch gekennzeichnet,**
daß jeder der Drehmoment-Regelkreise von einem üblichen aus Drehmoment-Regler (26;36) und Stromrichter (27;37) gebildeten Umrichter (18;19) gebildet ist, wobei aus dem von dem Stromrichter (27;37) an den zugeordneten Spindelantrieb (10;11) abgegebenen Strom der Drehmoment-Istwert (iᵢ₁; iᵢ₂) gebildet ist.

14. Werkzeugmaschine nach einem der Ansprüche 9 bis 13,
**dadurch gekennzeichnet,**
daß zwischen die Stellwert-Fensterschaltung (40) und den Ausgang des Drehzahl-Reglers (23) des anderen Regelkreises ein Verstärker bzw. ein Dämpfungsglied (39) mit variabler Verstärkung bzw. Dämpfung geschaltet ist.

15. Werkzeugmaschine nach einem der Ansprüche 9 bis 14,
**dadurch gekennzeichnet,**
daß die Drehzahl-Sollwert-Eingänge der beiden Drehzahl-Regelkreise miteinander sowie mit einem Drehzahl-Sollwert-Geber, der vorzugsweise Teil einer numerischen Steuereinheit (20) ist, verbunden sind.

16. Werkzeugmaschine nach einem der Ansprüche 9 bis 15,
**dadurch gekennzeichnet,**
daß jeder Spindel (1;2) ein Drehwinkel-Istwert-Geber (16;17) zugeordnet ist, daß die beiden Drehwinkel-Istwert-Geber sowie ein Drehwinkel-Sollwert-Geber, der vorzugsweise Teil einer numerischen Steuereinheit (20) ist, zwecks Bildung einer Drehwinkel-Regelabweichung mit einer Vergleichstelle (29) verbunden sind, wobei die Regelabweichung aus dem Unterschied zwischen der Differenz der beiden Drehwinkel-Istwerte (φᵢ₂ - φᵢ₁) und dem Drehwinkel-Sollwert (φₛ) gebildet wird, daß die Drehwinkel-Regelabweichung über einen Schalter (30) einem Drehwinkel-Regler (31) zuführbar ist und daß der Ausgang des Drehwinkel-Reglers mit der Drehzahl-Vergleichstelle (32) des einen Drehzahl-Regelkreises (32,33,19,11) verbunden ist derart, daß aus der Differenz zwischen Drehzahl-Sollwert (nₛ) und Drehzahl-Istwert (nᵢ₂) sowie den von dem Drehwinkel-Regler (31) gebildeten Drehwinkel-Stellwert die Regelabweichung für den erwähnten einen Drehzahl-Regelkreis gebildet wird.

17. Werkzeugmaschine nach Anspruch 16,
**dadurch gekennzeichnet,**
daß jeder der beiden Drehwinkel-Istwert-Geber (16;17) mit dem Eingang eines Differenziergliedes (28,38) zwecks Bildung der entsprechenden Drehzahl-Istwerte (nᵢ₁ ;nᵢ₂) verbunden ist und daß der Ausgang jedes Differenziergliedes (28;38) mit der Vergleichstelle (22;32) des zugeordneten Drehzahl-Regelkreises verbunden ist.

18. Werkzeugmaschine nach den Ansprüchen 10 und 16 oder 17,
**dadurch gekennzeichnet,**
daß der Komparator (41) oder ein zusätzlicher Komparator mit den beiden Drehwinkel-Gebern (16;17) zwecks Bildung der Differenz der beiden Drehwinkel-Istwerte (φᵢ₂ - φᵢ₁) und Vergleich dieser Differenz mit einem Grenzwert verbunden ist und daß der Komparator (41) und/oder der zusätzliche Komparator ein die mechanische Trennung der Spindeln (1;2) anzeigendes Trennsignal erzeugt, wenn die Differenz der Drehzahl-Istwerte und/oder die Differenz der Drehwinkel-Istwerte (nᵢ₁ - nᵢ₂) den entsprechenden Grenzwert überschreiten bzw. überschreitet.

19. Werkzeugmaschine nach Anspruch 18,
**dadurch gekennzeichnet,**
daß der Komparator (41) und gegebenenfalls der zusätzliche Komparator Teil der numerischen Steuereinheit (20) sind.

## Claims

1. Process for cutting a workpiece (9) in a machine tool in which the workpiece can be clamped between two separately driven, rpm-controlled spindles (1;2), characterized in that changes in the control values (iₛ₂) of the rpm controller for the one spindle (2) are only permitted within a tolerance band (iₒ₂, iᵤ₂), the tolerance band being prescribed by variable limits which are located above and below the control values (iₛ₁) for the rpm controller for the other spindle (1), and in that when the spindles (1;2) are not running in synchronism the tolerance band is set to wide and when they are running in synchronism it is set to narrow.

2. Process according to Claim 1, characterized in that, in addition, the torque of the two spindles (1;2) is controlled, and in that the control value of the rpm controller for each of the two spindles is used as the set torque value for the respective spindle.

3. Process according to Claim 1 or 2, characterized in that the limit of the tolerance band are selected to be such that the upper and the lower limit value (iₒ₂, iᵤ₂) of the tolerance band for the control value (iₛ₂) of the rpm controller form a linear function f(iₛ₁) of the control value (iₛ₁) of the rpm controller.

4. Process according to Claim 2 or 3, characterized in that the ratio of the control values (iₛ₁; iₛ₂) of the rpm controller for the two spindles (1;2) is selected to be different from 1, at least when the workpiece (9) is clamped in between both spindles and is being processed, for the purpose of distributing cutting force to both spindles.

5. Process according to one of Claims 1 to 4, characterized in that, in addition, the angle of rotation of at least one spindle (2) is controllable, and in that the set angle of rotation value (φₛ) for this spindle has connected to it, in addition to the actual angle of rotation value (φᵢ₂) of this spindle (2), the actual angle of rotation value (φᵢ₁) of the other spindle (1) in order to form the deviation of the angle of rotation, such that the deviation of the angle of rotation is produced from the deviation in the difference of the actual angle of rotation values (φᵢ₂ - φᵢ₁) of the two spindles (1;2) from the set angle of rotation value (φₛ) for the one spindle (2).

6. Process according to Claim 5, characterized in that the control angle of rotation value (φₛ) controller can be connected to the deviation of the rpm determined from the actual rpm value (nᵢ₂) and set rpm value (nₛ) of the one rpm control circuit by means of a comparison point (32).

7. Process according to one of Claims 1 to 6, characterized in that, in order to determine the disconnection of the mechanical connection of the two spindles (1;2), in particular of a completed cutting-off process on the workpiece (9) which is clamped in between the two spindles, it is tested whether the difference between the actual rpm values (nᵢ₂ - nᵢ₁) of the two spindles exceeds a prescribed limit value.

8. Process according to Claims 5 and 7, characterized in that, in addition, it is tested whether the difference between the actual angle of rotation values (φᵢ₂ - φᵢ₁) exceeds a specific limit value.

9. Machine tool for cutting a workpiece (9) which can be clamped in between two spindles (1;2) in order to carry out the process according to Claim 1, having in each case one separate drive (10;11) for each of the two spindles, which drive is part of an rpm control circuit assigned to each spindle, characterized in that the rpm control system of one rpm control circuit (32,33,19,11,17,38) is connected via a control value window circuit (40) to the output of the rpm controller (23) of the other rpm control circuit (22,23,18,10,16,28), and in that the width of the window of the control value window circuit (40) can be changed in such a way that it is wide when the spindles (1,2) are not running in synchronism and is narrow when they are running in synchronism.

10. Machine tool according to Claim 9, characterized in that the control value window circuit (40) is connected to the output of a comparator (41), to whose inputs the actual rpm values (nᵢ₁ - nᵢ₂) of the two rpm control circuits are fed and which produces an adjustment signal for reducing the window width for the control value window circuit (40) when the difference between the actual rpm values (nᵢ₁ - nᵢ₂) drops below a specific limit value.

11. Machine tool according to Claim 9 or 10, characterized in that the control value window circuit (40) is connected to the output of a comparator (41), to whose inputs the actual angle of rotation values (φᵢ₁; φᵢ₂) of the two control circuits are fed and which produces an adjustment signal for reducing the width of the window for the control value window circuit (40) when the difference between the actual angle of rotation values (φᵢ₂ - φᵢ₁) drops below a specific limit value.

12. Machine tool according to one of Claims 9 to 11, characterized in that the control system of the rpm of each of the two rpm control circuits contains a subordinate torque control circuit whose set torque value input (25;35) is identical to the rpm-controller control-value input of the rpm control system of the rpm control circuit which is higher ranking than it.

13. Machine tool according to Claim 12, characterized in that each of the torque control circuits is formed by a customary converter (18;19) formed from a torque controller (26;36) and power converter (27;37), the actual torque value (iᵢ₁;iᵢ₂) being formed from the current which is output by the power converter (27;37) to the associated spindle drive (10;11).

14. Machine tool according to one of Claims 9 to 13, characterized in that an amplifier or a damping element (39) with variable amplification and damping is connected between the control-value window circuit (40) and the output of the rpm controller (23) of the other control circuit.

15. Machine tool according to one of Claims 9 to 14, characterized in that the set rpm value inputs of the two rpm control circuits are connected to one another and to a set rpm value sensor which is preferably part of a numerical control unit (20).

16. Machine tool according to one of Claims 9 to 15, characterized in that each spindle (1;2) is assigned to an actual angle-of-rotation value sensor (16;17), in that the two actual angle-of-rotation value sensors and a set angle-of-rotation sensor which is preferably part of a numerical control unit (20) are connected to a comparison point (29) in order to form an angle-of-rotation deviation, the deviation being formed from the difference between the difference between the two actual angle of rotation values (φᵢ₂ - φᵢ₁) and the set angle of rotation value (φₛ), in that the angle-of-rotation deviation can be fed via a switch (30) to an angle-of-rotation controller (31), and in that the output of the angle-of-rotation controller is connected to the rpm comparison point (32) of the one rpm control circuit (32,33,19,11) in such a way that the deviation for the aforesaid one rpm control circuit is formed from the difference between the set rpm value (nₛ) and the actual rpm value (nᵢ₂) and the angle-of-rotation control value formed by the angle-of-rotation controller (31).

17. Machine tool according to Claim 16, characterized in that each of the two actual angle-of-rotation value sensors (16;17) is connected to the input of a differentiator element (28,38) in order to form the corresponding actual rpm values (nᵢ₁;nᵢ₂), and in that the output of each differentiator element (28;38) is connected to the comparison point (22;32) of the associated rpm control circuit.

18. Machine tool according to Claims 10 and 16 or 17, characterized in that the comparator (41) or an additional comparator is connected to the two rpm sensors (16;17) in order to form the difference between the two actual angle-of-rotation values (φᵢ₂ - φᵢ₁) and comparison of this difference with a limit value, and in that the comparator (41) and/or the additional comparator produces a disconnection signal which indicates the mechanical disconnection of the spindles (1;2) when the difference between the actual rpm values and/or the difference between the actual angle-of-rotation values (nᵢ₁ - nᵢ₂) exceed or exceeds the corresponding limit value.

19. Machine tool according to Claim 18, characterized in that the comparator (41) and, if appropriate, the additional comparator are part of the numerical control unit (20).

## Revendications

1. Procédé pour usiner, avec enlèvement de copeaux, une pièce à usiner (9) dans une machine-outil, selon lequel la pièce à usiner peut être serrée entre deux broches (1;2) qui sont entraînées séparément et dont les vitesses de rotation peuvent être réglées, caractérisé en ce qu'on autorise des variations des valeurs de consigne (iₛ₂) du régulateur de la vitesse de rotation pour une broche (2), uniquement dans une plage de tolérances (iₒ₂, iᵤ₂), la plage de tolérances étant prédéterminée par des limites variables situées au-dessus et au-dessous des valeurs de consigne (iₛ₁) du régulateur de la vitesse de rotation, pour l'autre broche (1), et qu'on règle une plage de tolérances large dans le cas d'une absence de synchronisme des broches (1;2) et une plage étroite de tolérances dans le cas du synchronisme.

2. Procédé selon la revendication 1, caractérisé en ce qu'en outre on règle le couple des deux broches (1;2) et qu'on utilise la valeur de consigne du régulateur de la vitesse de rotation pour chacune des deux broches en tant que valeur de consigne du couple pour la broche considérée.

3. Procédé selon la revendication 1 ou 2, caractérisé en ce qu'on choisit les limites de la plage de tolérances de manière que les valeurs limites supérieure et inférieure (iₒ₂, iᵤ₂) de la plage de tolérances pour la valeur de consigne (iₛ₂) du régulateur de la vitesse de rotation forment une fonction linéaire f(iₛ₁) de la valeur de consigne (iₛ₁) du régulateur de la vitesse de rotation.

4. Procédé selon la revendication 2 ou 3, caractérisé en ce qu'on choisit une valeur différente de 1 pour le rapport des valeurs de consigne (iₛ₁; iₛ₂) du régulateur de la vitesse de rotation pour les deux broches (1;2), en vue de répartir la force de coupe entre les deux broches, au moins lorsque la pièce à usiner (9) est serrée dans les deux broches et est usinée.

5. Procédé selon l'une des revendications 1 à 4, caractérisé en ce que l'on peut régler en supplément la vitesse de rotation d'au moins une broche (2), qu'à la valeur de consigne (φₛ) de l'angle de rotation pour cette broche on ajoute, pour former l'écart de régulation des angles de rotation, outre la valeur réelle (φᵢ₂) de l'angle de rotation de cette broche (2), la valeur réelle (φᵢ₁) de l'angle de rotation de l'autre broche (1) de sorte qu'on obtient l'écart de régulation des angles de rotation à partir de l'écart entre la différence des valeurs réelles (φᵢ₂-φᵢ₁) des angles de rotation des deux broches (1;2) et la valeur de consigne (φₛ) de l'angle de rotation pour la première broche (2).

6. Procédé selon la revendication 5, caractérisé en ce qu'on ajoute la valeur de consigne (φₛ) formée par le régulateur de l'angle de rotation, à l'écart de régulation de la vitesse de rotation, déterminé à partir de la valeur réelle (nᵢ₂) de la vitesse de rotation et de la valeur de consigne (nₛ) de la vitesse de rotation, d'un circuit de régulation de la vitesse de rotation au moyen d'un noeud comparateur (32).

7. Procédé selon l'une des revendications 1 à 6, caractérisé en ce que pour la détermination de la séparation de la liaison mécanique entre les deux broches (1;2), notamment d'une opération de décolletage entièrement terminée sur la pièce à usiner (9) serrée entre les deux broches, on vérifie si la différence des valeurs réelles (nᵢ₂-iᵢ₁) des vitesses de rotation des deux broches dépasse une valeur limite prédéterminée.

8. Procédé selon les revendications 5 et 7, caractérisé en ce qu'on vérifie en outre si les différences entre les valeurs réelles (φᵢ₂-φᵢ₁) entre les angles de rotation dépassent une valeur limite déterminée.

9. Machine-outil pour l'usinage avec enlèvement de copeaux d'une pièce à usiner (9) pouvant être serrée entre deux broches (1;2) pour la mise en oeuvre du procédé selon la revendication 1, comportant respectivement un dispositif d'entraînement séparé (10;11) pour chacune des deux broches, qui fait partie d'un circuit de régulation de la vitesse de rotation associée à chaque broche, caractérisée en ce que la section de régulation de la vitesse de rotation d'un circuit (32,33,9,11,17,38) de réglage de la vitesse de rotation est reliée par l'intermédiaire d'un circuit (40) à fenêtre de valeurs de consigne, à la sortie du régulateur (23) de la vitesse de rotation de l'autre circuit (22,23,18,10,16,28) de régulation de la vitesse de rotation, et que la largeur de la fenêtre du circuit (40) à fenêtre de valeurs de consigne peut être modifiée de telle sorte qu'elle est large en cas de non synchronisme entre les broches (1,2) et qu'elle est étroite en cas de synchronisme.

10. Machine-outil selon la revendication 9, caractérisée en ce que le circuit (40) à fenêtre de valeurs de consigne est relié à la sortie d'un comparateur (41), aux entrées desquelles sont envoyées les valeurs réelles (nᵢ₁-nᵢ₂) des vitesses de rotation des deux circuits de régulation des vitesses de rotation et qui produit un signal de comparaison servant à réduire la largeur de la fenêtre pour le circuit (40) à fenêtre de valeurs de consigne, lorsque la différence entre les valeurs réelles (nᵢ₁-nᵢ₂) des valeurs de consigne des vitesses de rotation tombe au-dessus d'une valeur limite déterminée.

11. Machine-outil selon la revendication 9 ou 10, caractérisée en ce que le circuit (40) à fenêtre de valeurs de consigne est relié à la sortie d'un comparateur (41), aux entrées duquel sont envoyées les valeurs réelles (φᵢ₁;φᵢ₂) des angles de rotation des deux circuits de régulation et qui produit un signal de réglage servant à réduire la largeur de la fenêtre pour le circuit (40) à fenêtre de valeurs de consigne, lorsque la différence entre les valeurs réelles (φᵢ₂-φᵢ₁) des angles de rotation tombe au-dessous d'une valeur limite déterminée.

12. Machine-outil selon l'une des revendications 9 à 11, caractérisée en ce que la section de régulation de la vitesse de rotation de chacun des deux circuits de régulation des vitesses de rotation contient un circuit asservi de régulation du couple, dont l'entrée (25;35) de la valeur de consigne du couple est identique à l'entrée de la valeur de consigne du régulateur de la vitesse de rotation de la section de régulation de la vitesse de rotation du circuit de régulation de la vitesse de rotation, auquel elle est subordonnée.

13. Machine-outil selon la revendication 13, caractérisée en ce que chacun des circuits de régulation du couple est formé par un mutateur usuel (18;19) qui est formé par un régulateur (26;36) du couple et par un convertisseur statique (27;37), la valeur réelle (iᵢ₁; iᵢ₂) du couple étant formée à partir du courant délivré par le convertisseur statique (27;37) au dispositif associé d'entraînement de broche (10;11).

14. Machine-outil selon l'une des revendications 9 à 13, caractérisée en ce qu'un amplificateur ou un circuit d'atténuation (39) ayant une amplification ou une atténuation variable est branché entre le circuit (40) à fenêtre de valeurs de consigne et la sortie du régulateur (23) de la vitesse de rotation de l'autre circuit de régulation.

15. Machine-outil selon l'une des revendications 9 à 14, caractérisée en ce que les entrées des valeurs de consigne de la vitesse de rotation des deux circuits de régulation de la vitesse de rotation sont reliées entre elles ainsi qu'un transmetteur de la valeur de consigne de la vitesse de rotation, qui de préférence fait partie de l'unité de commande numérique (20).

16. Machine-outil selon l'une des revendications 9 à 15, caractérisée en ce qu'un transmetteur (16;17) de la valeur réelle de l'angle de rotation est associé à chaque broche (1;2), que les deux transmetteurs des valeurs de rotation des angles de rotation ainsi qu'un transmetteur de la valeur de consigne de l'angle de rotation, qui de préférence fait partie de l'unité de commande numérique (20), sont réunis à un noeud comparateur (22) pour la formation d'un écart de réglage de l'angle de rotation, l'écart de réglage étant formé à partir de la différence entre la différence des deux valeurs réelles (φᵢ₂-φᵢ₁) des angles de rotation et la valeur de consigne (φₛ) de l'angle de rotation, que l'écart de réglage de l'angle de rotation peut être envoyé par l'intermédiaire d'un commutateur (3) à un régulateur (31) de l'angle de rotation, et que la sortie du régulateur de l'angle de rotation est reliée au noeud comparateur (32) de la vitesse de rotation d'un circuit (32,33,19,11) de régulation de la vitesse de rotation de telle sorte que l'écart de réglage pour le premier circuit mentionné de régulation de la vitesse de rotation est formé à partir de la différence entre la valeur de consigne (nₛ) de la vitesse de rotation et la valeur réelle (nᵢ₂) de la vitesse de rotation ainsi qu'à partir de la valeur de consigne de l'angle de rotation, formée par le régulateur (31) de l'angle de rotation.

17. Machine-outil selon la revendication 7, caractérisée en ce que chacun des deux transmetteurs (16;17) des valeurs réelles des angles de rotation est relié à l'entrée d'un circuit différentiateur (28,48) pour la formation des valeurs réelles correspondantes (nᵢ₁,nᵢ₂) des vitesses de rotation, et que la sortie de chaque circuit différentiateur (28;38) est reliée au noeud comparateur (22;32) du circuit associé de régulation de la vitesse de rotation.

18. Machine-outil selon la revendication 16 ou 17, caractérisée en ce que le comparateur (41) ou un comparateur supplémentaire est relié aux deux transmetteurs (16;17) des valeurs des angles de rotation pour la formation de la différence entre les deux valeurs réelles (φᵢ₂-φᵢ₁) des angles de rotation et comparer cette différence à une valeur limite, et que le comparateur (41) et/ou le comparateur supplémentaire produit un signal de séparation qui indique la séparation mécanique des broches (1;2), lorsque la différence entre les valeurs réelles des vitesses de rotation et la différence entre les valeurs réelles (nᵢ₁-nᵢ₂) des angles de rotation dépassent, par valeurs supérieures ou inférieures, la valeur limite correspondante.

19. Machine-outil selon la revendication 18, caractérisée en ce que le comparateur (41) et éventuellement le comparateur supplémentaire font partie de l'unité de commande numérique (20).
